# EUROPÄISCHE PATENTSCHRIFT

(11) **EP 0 664 462 B1**
(45) Veröffentlichungstag und Bekanntmachung des Hinweises auf die Patenterteilung: **13.03.2002**
(21) Anmeldenummer: 94120708.6
(22) Anmeldetag: 27.12.1994
(51) Int. Cl.: G01S 1/72

(54) **Sonarpinger**
Acoustic beacon
Balise acoustique

(30) Priorität: 21.01.1994 DE 9401028 U
(43) Veröffentlichungstag der Anmeldung: 26.07.1995
(73) Patentinhaber: Ebinger, Klaus, D-51149 Köln (DE)
(72) Erfinder: Ebinger, Klaus, D-51149 Köln (DE)
(74) Vertreter: Heim, Hans-Karl, Dipl.-Ing.

(56) Entgegenhaltungen:
- FR-A- 2 105 206
- GB-A- 2 119 980

## Beschreibung

Die Erfindung betrifft einen Sonarpinger gemäß Oberbegriff des Anspruches 1.
Unter Sonarpinger wird hierbei ein schallabstrahlender Sender verstanden, der insbesondere unter Wasser als Schallsender eingesetzt wird, wobei auch eine pulsartige Aussendung von Schallwellen damit impliziert sein kann.

Auf dem Berufs- und Freizeitfeld des Tauchens kommt es immer wieder zu kritischen Notfallsituationen, gegebenenfalls sogar zu tödlichen Unfällen von Tauchern. Da das Tauchen weltweit ein immer stärker beliebter Volkssport wird, häufen sich daher auch überall diese Unfall- bzw. Notfallsituationen. Entsprechende Hilfeleistungen in derartigen Situationen, wie das Suchen, Auffinden und Bergen von Tauchern sind mit erheblichen finanziellen Belastungen für die Beteiligten verbunden.

Bisher stand jedoch noch kein geeignetes Gerät, bzw. ein entsprechendes Verfahren zur Ortung eines verunglückten Tauchers zur Verfügung.
Die bislang praktizierten Suchmethoden sind zum Auffinden eines verunglückten Tauchers völlig unzulänglich. So werden beispielsweise Magnetometer eingesetzt, mit welchen die Tauchflaschen, sofern diese magnetisch sind, in etwa drei Meter Entfernung detektiert werden können.

Diese Art der Suchmethode muß äußerst präzis durchgeführt werden, um überhaupt einen Erfolg verzeichnen zu können und verlangt zudem einen großen Zeitaufwand. Magnetische Fremdeinflüsse und in den Tauchgewässern vorhandener Schrott erschweren jedoch ein derartiges Detektieren.

Unterwasserkameras können zwar in klaren Gewässern und Bergseen eingesetzt werden. Aber auch hiermit ist das Auffinden verunglückter Taucher äußerst mühsam und ineffizient und in der Regel nur bis zu bestimmten Wassertiefen einsetzbar.

In der FR-A-2 105 206 ist eine Signalvorrichtung mit einem Gehäuse offenbart, in welchem elektrische Komponenten aufgenommen sind. Getrennt von dem Gehäuse umfasst die Vorrichtung des Standes der Technik einen Sender, welcher über eine elektrische Leitung mit den anderen elektrischen Komponenten innerhalb des Gehäuses in Verbindung steht.

Eine weitere Signalvorrichtung zur Verwendung unter Wasser ist in der GB-A-2 119 980 offenbart. Die Vorrichtung umfasst ein wasserdichtes Gehäuse und einen daran angeordneten Schalter.
Über den Schalter lässt sich die Charakteristik der ausgesendeten Schallimpulse einstellen. Diese Vorrichtung des Standes der Technik dient daher der bewussten Verständigung eines Tauchers mit seiner Umgebung.

Der Erfindung liegt daher die **Aufgabe** zugrunde, einen Sonarpinger zu schaffen, welcher kostengünstig ist und mit dessen Hilfe in Notsituationen geratene oder verunglückte Taucher schnell und sicher aufgespürt werden können.

Diese Aufgabe wird mit den Merkmalen von Anspruch 1 gelöst.

Im Rahmen der Erfindung wird ein aktiver, relativ kleiner Sonarpinger geschaffen, bei welchem der Schallwandler in einem Pingerkopf angeordnet ist und bei dem der Pinger an dem Taucher oder Tauchobjekt in der Weise befestigbar ist, dass sich der Pinger entsprechend einem Auftrieb ausrichtet. Somit ist es möglich, einen aktiven, relativ kleinen Sonarpinger zu schaffen, der über eine Timerschaltung nach Ablauf der maximalen Tauchzeit und gegebenenfalls einer entsprechenden Reservezeit aktiv Schallwellen auf einer entsprechenden Notfrequenz aussendet. Diese Notfrequenz ist geeigneterweise und im Sinne einer mit den für Notfallsituationen zuständigen Institutionen abgestimmten Frequenz auf eine bevorzugte Resonanzfrequenz des Schallwandlers des Sonarpingers eingestellt. Durch die Tatsache, dass der Schallwandler in einem Pingerkopf angeordnet ist, besteht nicht mehr die Notwendigkeit, eine defektanfällige Kabelverbindung zwischen dem Schallwandler und den sonstigen Komponenten der Anordnung bereitzustellen. Dadurch, dass der Pinger an dem Taucher in der Weise befestigbar ist, dass sich der Pinger entsprechend einem Auftrieb ausrichtet, ist es praktisch ausgeschlossen, dass der Taucher die Aussendung der Schallwellen abschirmt.

Der erfindungsgemäße Sonarpinger kann daher als preiswerte Zusatzeinrichtung, zum Beispiel in der Ausführungsform eines Rohrschwingers mit einer Verbindungs- oder Befestigungsleine am Rücken des Tauchers angebracht sein. Nach der eingestellten maximalen Tauchzeit sendet der Sonarpinger dann Schallsignale als Notsignale aus, die vom entsprechenden Tauchboot empfangen werden. Die Lokalisation des verunglückten oder sich in einer Notsituation befindlichen Tauchers kann dann über ein hinreichend bekanntes Sonargerät und bei der direkten Aufspürung des vermißten Tauchers durch einen Rettungstaucher mittels eines Handsonargerätes durchgeführt werden.

Da Notsituationen nicht immer mit dem Tod eines Tauchers verbunden sein müssen, sondern auch Situationen vorstellbar sind, in denen der Taucher in eine nichtgewollte kritische Neigungslage kommt oder ein Einklemmen von Körperteilen in einem Wrackbereich oder Unterwasserhindernis sein kann, ist der Sonarpinger zweckmäßigerweise mit einem Schalter ausgestattet, der bei einem Abkippen oder Verkippen des Sonarpingers, z.B. über einen Quecksilberschalter, eine Aktivierung des Sonarpingers auslöst. Weiterhin ist vorteilhafterweise auch ein manuell betätigbarer Handschalter am Sonarpinger vorgesehen.

Um den Sonarpinger sowohl energiesparend wie auch strahlungsorientiert mitführen zu können, ist dieser mit einem Auftriebsgehäuse ausgestattet. Dieses Auftriebsgehäuse, das druckdicht ein Einschraub- oder Einsteckmodul aufnimmt, ist mit einer Befestigungsleine am Taucher angebracht. Hierdurch wird der stirnseitig im Pingerkopf vorgesehene Schallwandler stets zur Wasseroberfläche ausgerichtet und erlaubt damit eine optimale Abstrahlung der Unterwasserschallwellen. Die Verbindungsleine ist üblicherweise am Boden des Gehäuses des Sonarpingers ankoppelbar, wobei die Länge so abgestimmt sein sollte, daß der Sonarpinger in Handreichweite des Tauchers verbleibt.

Das Gehäuse des Sonarpingers ist geeigneterweise ein rohr- bzw. becherförmiges Gehäuse, in das eine komplette Moduleinheit, vorzugsweise eingeschraubt wird. Die Moduleinheit weist von der Stirnseite her einen Pingerkopf auf, der abgestuft in einen kreiszylinderförmigen Teil mit z.B. eingelegter O-Ringdichtung übergeht. Diesem Teil schließt sich dann das z.B. noch zusätzlich vergossene Elektronikmodul mit einer Programmierfläche an. Die Kontakte des Elektronikmoduls erhalten die Spannungs- und Stromversorgung aus einer entsprechenden Batterie oder einem integrierbaren Akku.
Dieses Modul wird insgesamt in das Gehäuse eingeschraubt, so daß ein druck- und wasserdicht gekapseltes Gehäuse für den Sonarpinger besteht. Zum Ausgleich eines Überdrucks beim Zusammenbau des Sonarpingers ist bodenseitig im Gehäuse eine Entlüftungsschraube vorgesehen, durch die vorzugsweise die Verbindungsleine geführt ist. Beim Öffnen dieser Entlüftungsschraube entweicht die beim Einschieben des Moduls in das Gehäuse komprimierte Luft. Hierbei ist ein gewisser Überdruck, der einen höheren Auftrieb des Sonarpingers sicherstellt, einstellbar. Selbstverständlich wird die Entlüftungsschraube vor einem Einsatz des Sonarpingers wieder in den Boden eingeschraubt.

Mit diesem Konstruktionsprinzip ist die Wandlerfläche des Sonarpingers stets zur Wasseroberfläche gerichtet. Im Hinblick auf eine Programmierung der Timerzeit oder dem Auswechseln der Batterie ist lediglich eine Entnahme des gesamten Moduls nach Aufschrauben der Entlüftungsschraube erforderlich.

Der hohe Wirkungsgrad und die preisgünstige Realisierung des Sonarpingers zeigt sich insbesondere beim Elektronikmodul.

Hierbei geht man von teueren Wandlerelementen ab und setzt ein handelsübliches Piezo-Element oder ein Summer-Element, die als Plättchen oder Scheibe ausgebildet sind, ein. In Verbindung mit einer Parallel- oder Serieninduktivität wird ein Resonanzkreis geschaffen, der auf die Eigenfrequenz des Schwingers bzw.
Transducers abgestimmt ist. Erst dadurch ist eine wirkungsvolle Abstrahlleistung über den Schallwandler möglich.
Beim Einsatz einer handelsüblichen, preisgünstigen Piezo-Scheibe als Wandlerelement macht man sich erfindungsgemäß ein Phänomen zunutze, daß beim frequenzmäßigen Durchwobbeln der Erregerspannung eine Vielzahl von Resonanzstellen in der Schwingungsamplitude des Schwingers vorhanden sind. Da an den Resonanzstellen bzw. Resonanzpunkten eine maximale Amplitude durch den Schwinger abgestrahlt wird, wird die Erregerspannung frequenzmäßig so durchgewobbelt, daß bestimmte Resonanzstellen wiederkehrend durchfahren werden. Der Sonarpinger wird daher insgesamt auf eine oder gegebenenfalls auf mehrere derartiger Resonanzstellen eingestellt, so daß man ein rhythmisches Sonarsignal erhält.
Derartige Resonanzstellen findet man im NF-Gebiet unterhalb von 10 kHz oder auch in einem Bereich von 40 bis 70 kHz.

Die mit der Elektronik verbundene Programmierfläche erlaubt daher die Einstellung der maximalen Tauchzeit, gegebenenfalls mit einer Reservezeit, so daß die Unterwassesrschallsignale des Sonarpingers nur in Notsituationen ausgesandt werden und in stark frequentierten Tauchgewässern keine "Verseuchung" mit Sonarsignalen auftritt. Eine Einstellmöglichkeit auch der entsprechenden Sendefrequenz über das Programmierfeld ist ebenfalls denkbar.

Die Erfindung wird nachstehend anhand schematischer Zeichnungen noch näher erläutert. Es zeigen:
- Fig. 1: einen erfindungsgemäßen Sonarpinger mit Verbindungsleine;
- Fig. 2: ein Einsetzmodul des Sonarpingers, sozusagen bei entferntem Gehäuse;
- Fig. 3: eine Draufsicht auf die stirnseitige Fläche des Sonarpingers;
- Fig. 4: eine bruchstückartige Vergrößerung des Bodenbereichs des Gehäuses;
- Fig. 5: ein Blockschaltbild der Elektronik des Sonarpingers;
- Fig. 6: ein Spannungs-Frequenz-Diagramm mit entsprechenden Resonanzstellen des Schallwandlers und

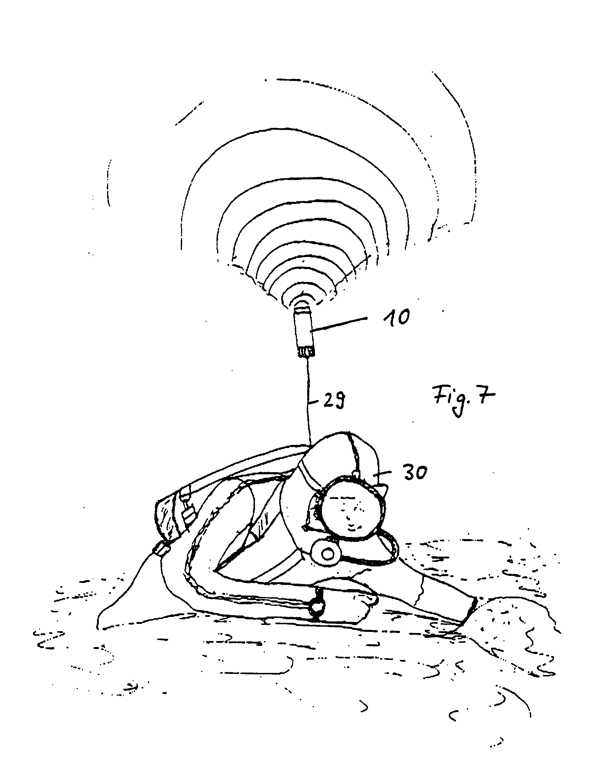

- Fig. 7: eine schematische Darstellung eines in eine Notfallsituation geratenen Tauchers mit einem Sonarpinger als Zusatzausstattung.

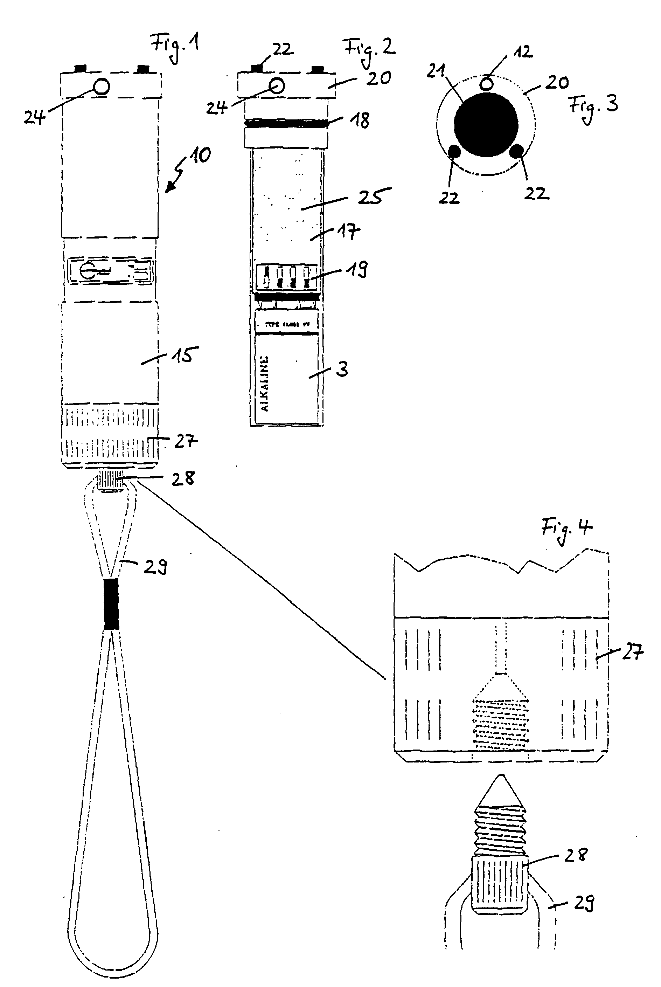

Ein kostengünstiger Sonarpinger 10 ist in Fig. 1 etwa in tatsächlicher Größe dargestellt. Der Sonarpinger 10 weist ein becherförmiges Gehäuse 15 auf, in dessen Gehäuseboden 27 eine Entlüftungsschraube 28 vorhanden ist. Im stirnseitigen, oberen Bereich liegt ein ringförmiger Materialbund, der den Pingerkopf 20 darstellt, am Rand des Gehäuses auf. Durch die Entlüftungsschraube 28 ist im Beispiel eine Verbindungsleitung 29 angeordnet.

In Fig. 2 ist schematisch das Einsetzmodul 25 in das Gehäuse 15 gezeigt. Dieses Einsetzmodul besteht aus dem Pingerkopf 20, der in einem durchmesserreduzierten Teil eine O-Ringdichtung 18 zum druck- und wasserdichten Abschluß mit dem Gehäuse aufweist. Daran schließt sich ein z.B. eingegossenes Elektronikmodul 17 an, das eine Programmierfläche 19 mit verschiedenen Einstellelementen aufweist. Die Anschlüsse des Elektronikmoduls stehen mit einer Batterie oder einem Akku 3 in Verbindung.
Dieses Einsteckmodul 25 ist als Einheit ausgelegt, so daß es lediglich des Einsetzens in das kreiszylinderförmige Gehäuse 15 und des Verschraubens bzw. Einsteckens zu einer kraftschlüssigen Verbindung bedarf.

Im stirnseitigen Bereich des Pingerkopfes 20 sind einerseits im Beispiel zwei Wasserkontakte 22 und im seitlichen Bereich ein manuell betätigbarer Schalterknopf 24 vorhanden.

Die Draufsicht nach Fig. 3 auf die Stirnfläche des Sonarpingers 10 zeigt die winkelbeabstandet vorgesehenen Wasserkontakte 22, die z.B. bei gleichzeitiger Wasserberührung das Einschalten der Timer-Schaltung 5 bewirken. Zusätzlich ist im Stirnbereich eine optische Einrichtung, z.B. als LED 12 vorhanden, mittels der der Ladezustand der Energieversorgungseinrichtung angezeigt werden kann.

Die kreisförmige innere Fläche stellt die Abstrahlungsfläche des Schallwandlers 21 dar.

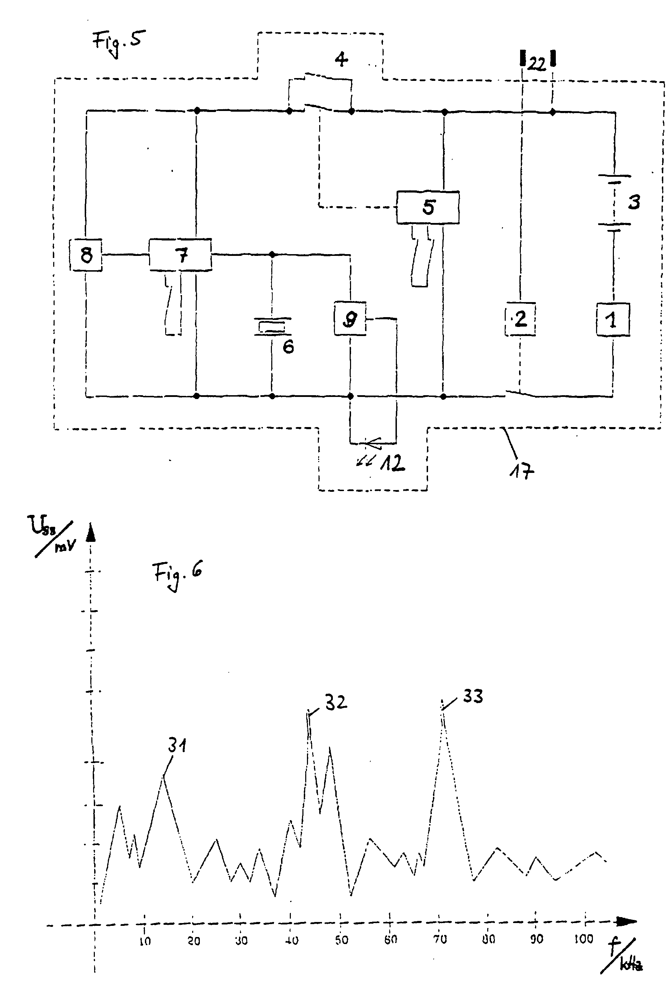

Zum Zusammenbau und dem druckdichten Abschluß des Gehäuses ist, wie in Fig. 4 dargestellt, die Entlüftungsschraube 28 im Bodenbereich des Gehäuses entfernt. Hierdurch entsteht beim Einsetzen des Moduls 25 in das Gehäuse, bedingt durch den Dichtungsabschluß kein Überdruck. Nach dem Einsetzen des Moduls 25 wird dann die Entlüftungsschraube 28 wieder im Boden arretiert.

Ein Prinzipaufbau der Elektronik des Sonarpingers ist in Fig. 5 gezeigt. Ein Verpolungsschutz 1 sichert die gesamte Elektronik gegen ein falsches Einlegen der Batterie 3. Die Batterie 3 steht einerseits mit einem externen Wasserkontakt 22 in Verbindung. Der zweite Wasserkontakt 22 ist dabei auf einen Wasserschalter 2 geführt, der den Batteriestromkreis aktiviert bzw. schaltet. Sobald der Sonarpinger durch Wasserkontakt aktiviert wird, läuft eine zeitprogrammierbare Timer-Schaltung 5.
Es ist weiterhin in Serie zum Batteriekreis ein Schalter 4 vorgesehen, der vorzugsweise als Quecksilberschalter ausgelegt sein kann, durch den bei einem Abkippen oder einer bestimmten Neigungslage des Sonarpingers 10 im Vergleich zu seiner Normallage ein frequenprogrammierbarer Generator 7 zur Auslösung eines Notsignales, d.h. der entsprechenden Schallabstrahlung im Notfrequenzbereich, aktiviert wird.

Der als Piezo-Schwinger ausgelegte Schallwandler 6 wird durch die Stufe bzw. den Generator 7 mit einer entsprechenden Erregerspannung beaufschlagt. Der Generator 7 wird durch die Timer-Schaltung 5 nach Ablauf der programmierten Zeit, den Neigungsschalter 4 oder einen nicht dargestellten manuellen Notfallschalter 24 aktiviert.

In der Stufe 8 wird für den Generator bzw. Sender 7 der gewünschte Wobbelhub erzeugt, durch dessen Frequenzabstimmung eine Erregerspannung auf das Wandlerelement gegeben wird, die eine Resonanzschwingung im Wandler bewirkt.

Weiterhin ist eine Schaltstufe 9 vorgesehen, die eine Leuchtdiode LED 12 treibt, welche zur Funktions- und Batteriekontrolle an Land vorgesehen ist.

Die Elektronik des Sonarpingers 10 ist so ausgelegt, daß man sich hierbei die Resonanzstellen 31, 32, 33 (siehe Fig. 6) des Spannungs-Frequenz-Diagramms eines Wandlerelementes zunutze macht. So zeigt die Fig. 6 einen typischen Frequenzgang einer Piezo-Scheibe mit einer Anzahl von Resonanzstellen 31, 32, 33, die als Betriebsfrequenz für den Sonarpinger ausgewählt werden können. Insbesondere eignen sich für die effiziente Schallabstrahlung Resonanzpunkte, in denen eine besonders hohe oder maximale Schwingungsamplitude ermittelt wird.
Im Diagramm nach Fig. 6, das als Abszisse die Frequenz und als Ordinate die Erregerspannung zeigt, liegen derartige Resonanzstellen etwa bei 15 kHz, bei 45 kHz und bei 70 kHz.

Die Erfindung schafft daher einen Sonarpinger mit sehr geringen Abmessungen, der äußerst kostengünstig herstellbar ist und im Hinblick auf Notfallsituationen mit mehreren Notfallschaltern zur Aktivierung einer Schallabstrahlung ausgelegt ist.

## Patentansprüche

1. Sonarpinger für Taucher und Tauchobjekte, insbesondere als Lokalisierungsender in Notfällen, mit
- einem Schallwandler (21),
- einer Aktivierungsschaltung (22, 4, 5, 24),
- einem druckdichten Gehäuse (15) und
- einer in dem Gehäuse (15) aufgenommenen Sendereinheit (25) und Energieversorgung (3),
- wobei die Aktivierungsschaltung (22, 4, 5, 24) mindestens eine Timer-Schaltung (5) zur automatischen Einschaltung des Sonarpingers (10) nach einem vorgegebenen Zeitintervall, insbesondere nach abgelaufener maximaler Tauchzeit, aufweist,
**dadurch gekennzeichnet,**
- **daß** der Schallwandler (21) in einem Pingerkopf (20) angeordnet ist und
- **daß** der Pinger (10) an dem Taucher oder Tauchobjekt in der Weise befestigbar ist, daß sich der Pinger (10) entsprechend einem Auftrieb ausrichtet.

2. Sonarpinger nach Anspruch 1,
**dadurch gekennzeichnet,**
**daß** die Aktivierungsschaltung ( 22, 4, 5, 24) einen Neigungs-Notschalter (4) und/oder einen Hand-Notschalter (24) aufweist.

3. Sonarpinger nach Anspruch 1 oder 2,
**dadurch gekennzeichnet,**
**daß** das Gehäuse (15) als Auftriebsgehäuse mit Ausrichtung des stirnseitig im Pingerkopf (20) vorgesehenen Schallwandlers (21) zur Wasseroberfläche und mit einer im Gehäuseboden (27) vorgesehenen Entlüftungseinrichtung (28), insbesondere einer Entlüftungsschraube, ausgebildet ist, und daß im Bereich des Gehäusebodens (27), insbesondere an der Entlüftungsschraube (28), eine Verbindungsleine (29) zum Tauchobjekt anbringbar ist.

4. Sonarpinger nach einem der Ansprüche 1 bis 3,
**dadurch gekennzeichnet,**
**daß** das Gehäuse (15) als zylinderförmiges Rohr- oder Bechergehäuse ausgebildet ist, das ein Modul mit Pingerkopf (20), Sendereinheit (25) und Batterie (3) als Schraub- oder Steckeinheit druckdicht aufnimmt.

5. Sonarpinger nach einem der Ansprüche 1 bis 4,
**dadurch gekennzeichnet,**
**daß** am Pingerkopf (20) eine Dichtung (18), insbesondere als O-Ringdichtung, zum Dichtungsabschluß mit dem Gehäuse (15) vorgesehen ist.

6. Sonarpinger nach einem der Ansprüche 1 bis 5,
**dadurch gekennzeichnet,**
**daß** der Schallwandler als Piezoelement (6) oder Summerelement, insbesondere als Scheibe, ausgebildet ist, das beim frequenzmäßigen Durchwobbeln des Erregersignales für den Schallwandler Resonanzstellen (31, 32, 33) mit großer Amplitude aufweist, und die Abstrahlung des Sonarsignals rhythmisch im Bereich einer Resonanzstelle mit maximaler Amplitude erfolgt.

7. Sonarpinger nach einem der Ansprüche 1 bis 6,
**dadurch gekennzeichnet,**
**daß** die Timer-Schaltung (5) als Langzeittimer-Schaltung ausgebildet ist.

8. Sonarpinger nach einem der Ansprüche 1 bis 7,
**dadurch gekennzeichnet ,**
**daß** das Sonarsignal auf eine Notfrequenz, insbesondere im Bereich von 10 kHz bis 100 kHz, abgestimmt ist.

9. Sonarpinger nach einem der Ansprüche 1 bis 8,
**dadurch gekennzeichnet,**
**daß** die Sendereinheit (25) als Elektronikmodul (17) mit einer Programmierfläche (19), insbesondere für die Timer-Schaltung (5) und die Sonarfrequenz, ausgebildet ist.

10. Sonarpinger nach einem der Ansprüche 1 bis 9,
**dadurch gekennzeichnet,**
**daß** am Pingerkopf (20) Wasserkontakte (22) und/oder der Hand-Notschalter (24) und/oder eine Anzeigeeinrichtung (12) mit ein oder mehreren Leuchtdioden für Kontrollfunktionen, für die eingestellte oder verbleibende Tauchzeit oder die Funktionsfähigkeit der Energieversorgung (3), vorgesehen sind.

## Claims

1. Sonar pinger for divers and submerged objects, particularly as a position finding transmitter in emergencies, having
- a sound transducer (21),
- an activating circuit (22, 4, 5, 24),
- a pressure-tight casing (15) and
- a transmitter unit (25) and a power supply (3) received in said casing (15),
- the activating circuit (22, 4, 5, 24) having at least one timing circuit (5) for automatically switching on the sonar pinger (10) after a predetermined time interval, particularly when the maximum diving time is at an end,
**characterized in that**
- the sound transducer (21) is located in a pinger head (20) and
- the pinger (10) can be fixed to the diver or submerged object in such a way that the pinger (10) is oriented in accordance with buoyancy.

2. Sonar pinger according to claim 1,
**characterized in that**
the activating circuit (22, 4, 5, 24) has an inclination emergency switch (4) and/or a hand emergency switch (24).

3. Sonar pinger according to claim 1 or 2,
**characterized in that**
the casing (15) is constructed as a buoyancy casing with orientation of the sound transducer (21) frontally provided on the pinger head (20) in direction to the water surface and with a venting device (28), particularly a venting screw, provided in the casing bottom (27) and that in the vicinity of the casing bottom (27), particularly on the venting screw (28), a connecting line (29) to the submerged object can be fitted.

4. Sonar pinger according to one of the claims 1 to 3,
**characterized in that**
the casing (15) is constructed as a cylindrical tubular or bucket casing, which receives in pressure-tight manner a module with pinger head (20), transmitter unit (25) and battery (3) as a screw or plug-in unit.

5. Sonar pinger according to one of the claims 1 to 4,
**characterized in that**
on the beacon head (20) is provided a seal (18), particularly in the form of an 0-ring seal, for sealing with the casing (15).

6. Sonar pinger according to one of the claims 1 to 5,
**characterized in that**
the sound transducer is constructed as a piezoelectric element (6) or buzzer element, particularly in disk form, which in the case of frequently sweeping of the excitation signal for the sound transducer has high amplitude resonance points (31, 32, 33) and the emission of the sonar signal takes place rhythmically with maximum amplitude in the vicinity of a resonance point.

7. Sonar pinger according to one of the claims 1 to 6,
**characterized in that**
the timing circuit (5) is constructed as a long-term timing circuit.

8. Sonar pinger according to one of the claims 1 to 7,
**characterized in that**
the sonar signal is tuned to an emergency frequency, particularly in the range 10 to 100 kHz.

9. Sonar pinger according to one of the claims 1 to 8,
**characterized in that**
the transmitter unit (25) is constructed as an electronic module (17) with a programming surface (19), particularly for the timing circuit (5) and the sonar frequency.

10. Sonar pinger according to one of the claims 1 to 9,
**characterized in that**
on the pinger head (20) are provided water contacts (22) and/or the hand emergency switch (24) and/or a display means (12) with one or more light emitting diodes for control functions, for the set or remaining diving time or the operability of the power supply (3).

## Revendications

1. Emetteur acoustique sous-marin pour plongeurs et objets immergés, en particulier servant d'émetteur de localisation dans des situations d'urgence, avec
- un transducteur acoustique (21),
- un circuit d'activation (22, 4, 5, 24),
- un boîtier (15) étanche à la pression et
- une unité émettrice (25) et une alimentation en énergie (3) logées dans le boîtier (15),
- le circuit d'activation (22, 4, 5, 24) présentant au moins un circuit de temporisation (5) pour mettre en route automatiquement l'émetteur acoustique sous-marin (10) après un intervalle de temps prédéterminé, en particulier au terme d'une durée maximale de plongée,
***caractérisé***
- ***en ce que*** le transducteur acoustique (21) est placé dans une tête d'émission (20), et
- ***en ce que*** l'émetteur (10) peut être fixé au plongeur ou à l'objet immergé de telle manière que l'émetteur (10) s'oriente d'une manière correspondant à une force ascensionnelle.

2. Emetteur acoustique sous-marin selon la Revendication 1, ***caractérisé en ce que*** le circuit d'activation (22, 4, 5, 24) présente un commutateur d'urgence d'inclinaison (4) et/ou un commutateur d'urgence manuel (24).

3. Emetteur acoustique sous-marin selon la Revendication 1 ou 2, ***caractérisé en ce que*** le boîtier (15) est conformé en boîtier ascensionnel avec orientation vers la surface de l'eau du transducteur acoustique (21) prévu à l'avant dans la tête d'émission (20) et avec un dispositif (28) d'évacuation d'air prévu dans le fond (27) du boîtier, en particulier une vis d'évacuation d'air, et ***en ce qu'***une corde de liaison (29) avec l'objet immergé peut être rapportée au niveau du fond (27) du boîtier, en particulier sur la vis (28) d'évacuation d'air.

4. Emetteur acoustique sous-marin selon l'une quelconque des Revendications 1 à 3, ***caractérisé en ce que*** le boîtier (15) est conformé en boîtier tubulaire ou en pot de forme cylindrique, qui contient un module avec tête d'émission (20), unité émettrice (25) et batterie (3), en tant qu'unité vissée ou encliquetée étanche à la pression.

5. Emetteur acoustique sous-marin selon l'une quelconque des Revendications 1 à 4, ***caractérisé en ce qu'**un* joint (18), en particulier un joint torique, est prévu sur la tête d'émission (20) pour assurer l'étanchéité avec le boîtier (15).

6. Emetteur acoustique sous-marin selon l'une quelconque des Revendications 1 à 5, ***caractérisé en ce que*** le transducteur acoustique est conformé en élément piézoélectrique (6) ou en élément sonneur, en particulier en disque, qui présente, lors du balayage de fréquence du signal excitateur pour le transducteur acoustique, des zones de résonance (31, 32, 33) de grande amplitude, et le rayonnement du signal de sonar s'effectue de manière rythmique au niveau d'une zone de résonance avec une amplitude maximale.

7. Emetteur acoustique sous-marin selon l'une quelconque des Revendications 1 à 6, ***carac* *térisé en ce que*** le circuit de temporisation (5) est conformé en circuit de temporisation de longue durée.

8. Emetteur acoustique sous-marin selon l'une quelconque des Revendications 1 à 7, ***caractérisé en ce que*** le signal de sonar est accordé sur une fréquence d'urgence, en particulier dans la plage de 10 kHz à 100 kHz.

9. Emetteur acoustique sous-marin selon l'une quelconque des Revendications 1 à 8, ***caractérisé en ce que*** l'unité émettrice (25) est conformée en module électronique (17) avec une surface de programmation (19), en particulier pour le circuit de temporisation (5) et la fréquence de sonar.

10. Emetteur acoustique sous-marin selon l'une quelconque des Revendications 1 à 9, ***caractérisé en ce qu'***il est prévu sur la tête d'émission (20) des contacts aquatiques (22) et/ou le commutateur d'urgence manuel (24) et/ou un dispositif d'affichage (12) avec une ou plusieurs diodes lumineuses pour des fonctions de contrôle, pour le temps de plongée réglé ou restant ou pour le bon fonctionnement de l'alimentation électrique (3).
